# FASCICULE DE BREVET EUROPEEN

(11) **EP 3 011 630 B1**
(45) Date de publication et mention de la délivrance du brevet: **09.08.2017**
(21) Numéro de dépôt: 14735622.4
(22) Date de dépôt: 13.06.2014
(51) Int. Cl.: H01M 10/617, H01M 10/625, H01M 10/637, H01M 10/42, H01M 2/34, H01M 10/615, H01M 10/0525

(54) **SYSTEME ET PROCEDE DE REGULATION DE LA TEMPERATURE D'UNE BATTERIE ELECTROCHIMIQUE**
SYSTEM UND VERFAHREN ZUM TEMPERIEREN EINER ELEKTROCHEMISCHEN BATTERIE
SYSTEM AND METHOD FOR REGULATING THE TEMPERATURE OF AN ELECTROCHEMICAL BATTERY

(30) Priorité: 18.06.2013 FR 1355719
(43) Date de publication de la demande: 27.04.2016
(73) Titulaire: Renault S.A.S., 92100 Boulogne-Billancourt (FR)
(72) Inventeur: BUI VAN, Anh Linh, 38250 Saint Nizier du Moucherotte (FR); ERCAN, Ali, 78280 Guyancourt (FR); PERICHON, Pierre, 38500 Voiron (FR); LALLICH, Sylvain, 38250 Lans En Vercors (FR)
(86) Numéro de dépôt international: PCT/FR2014/051458
(87) Numéro de publication internationale: WO 2014/202880

(56) Documents cités:
- WO-A1-2012/117113
- WO-A1-2012/172035
- WO-A2-2011/127251
- US-A1- 2005 017 690

## Description

La présente invention concerne le domaine des systèmes connectés à une batterie électrochimique, tel que par exemple les aéronefs, les véhicules terrestres (camion, bus, véhicules à deux roues...) ou maritimes ou encore les parcs de batteries stationnaires. En particulier, l'invention concerne le domaine des véhicules possédant une chaine de traction hybride ou électrique. Un véhicule hybride comprend au moins deux moteurs (ou machines assimilées) dont au moins un électrique. En particulier, l'invention concerne le domaine des batteries électrochimiques utilisées dans de tels véhicules.

Plus particulièrement, l'invention concerne les systèmes permettant de réguler la température des batteries électrochimiques alimentant en courant le moteur électrique.

Dans les systèmes classiques existants, le moteur électrique d'un véhicule possédant une chaîne de traction hybride ou électrique est couplé à un dispositif de stockage de l'énergie électrique sous forme d'une batterie électrochimique, par exemple de type Oxyde de Plomb-Acide sulfurique, Nickel-Hydrure ou encore Lithium-ion.

Une batterie électrochimique du moteur électrique d'un véhicule possédant une chaîne de traction hybride ou électrique est généralement constituée par un ensemble d'éléments accumulateurs d'énergie électrique connectés en série et comprenant chacun au moins une cellule électrochimique. Bien que la tension électrique aux bornes d'une cellule électrochimique soit relativement faible (de l'ordre de 4V pour une cellule de type Li-ion), la tension aux bornes de la batterie est généralement de plusieurs centaines de volts. Une telle batterie est à cet effet appelée batterie haute tension, mais elle présente l'inconvénient de disposer d'une résistance interne relativement élevée mais surtout très sensible à la température de l'accumulateur.

Il est connu que la capacité et la puissance utiles d'une telle batterie sont maximales pour une certaine plage de températures, typiquement entre 15°C et 45°C pour des cellules Li-ion. En dehors de cette plage, notamment lorsque la température de l'accumulateur est inférieure à 0°C la capacité et la puissance de la batterie peuvent être insuffisantes pour garantir le fonctionnement nominal du véhicule en mode électrique. D'autre part, à basse température, il est difficile de décharger ou recharger complètement la batterie. Au-delà de 45°C, l'utilisation de la batterie est généralement volontairement limitée pour éviter l'endommagement de celle-ci.

En effet, certains types de batterie électrique, telles que les batteries comportant des cellules électrochimiques lithium-ion, sont particulièrement affectées par des températures très froides, dans la mesure où leurs résistances internes croient avec une diminution de température, de sorte qu'elles peuvent ne plus être en mesure de garantir l'alimentation électrique du moteur électrique ou d'être rechargées lorsque la température est inférieure à 0°C.

Afin de ne pas solliciter trop fortement le coeur électrochimique de telles cellules ou de ne pas favoriser la dégradation de l'électrolyte ainsi que l'augmentation des réactions parasites, il est nécessaire de limiter la valeur de l'intensité du courant les traversant lorsque la température est inférieure à 0°C ou supérieure à 45°C.

Il est parfois possible de sur-dimensionner les cellules batterie afin d'éviter ces inconvénients, mais cela engendre une augmentation de coût et d'encombrement non négligeable.

Par conséquent, il est généralement nécessaire de prévoir, dans les véhicules équipés de telles batteries, un système de réchauffement des cellules électrochimiques qui la constituent en cas de température extérieure faible ou de refroidissement en cas de surchauffe des éléments accumulateurs d'énergie.

Par ailleurs, les éléments accumulateurs d'énergie étant connectés en série afin de maximiser la tension en sortie de la batterie et de réduire la valeur de l'intensité du courant et le dimensionnement du câblage, lorsqu'un seul élément est en écart de température par rapport aux autres éléments, l'ensemble des éléments accumulateurs d'énergie subiront une limitation de puissance puisque la même intensité de courant traverse chacun des éléments accumulateurs d'énergie. Ainsi, un seul élément en écart de température dans une batterie impose ses limitations sur la batterie toute entière.

De plus, ces hétérogénéités sont accentuées lorsque la batterie n'est plus un bloc homogène d'éléments accumulateurs d'énergie mais possède des formes complexes, par exemple en forme de « T », ou est constituée par un ensemble d'éléments accumulateurs d'énergie répartis en divers endroits du véhicule.

On connaît déjà des systèmes de réchauffement et refroidissement d'un pack batterie comprenant un dispositif de chauffage extérieur à la batterie ou à l'intérieur de la batterie autour des éléments accumulateurs, comprenant un circuit de refroidissement à air ou à eau permettant de refroidir ou réchauffer la batterie électrique, notamment à l'aide d'un moyen de chauffage du fluide caloporteur circulant dans le circuit de refroidissement, tel que des résistances à coefficients de température positif (« CTP »). Ces résistances peuvent être implantées directement sur le circuit d'air destiné à être soufflé sur la batterie.

Une telle solution n'est cependant pas optimisée en termes de coût et d'encombrement et peut être intrusive avec le système de refroidissement global du véhicule.

De plus, une telle solution est utilisée pour conditionner thermiquement l'ensemble de la batterie, or la distribution du fluide caloporteur et l'évolution de ses propriétés (température notamment) peuvent conduire à des disparités de température entre les cellules. En effet, il peut exister des écarts de température importants entre différentes zones de la batterie, par exemple de l'ordre de 20°C. Les premières cellules en contact avec le circuit de refroidissement sont refroidies ou réchauffées de manière satisfaisante. Celles qui se trouvent à la fin du circuit de refroidissement reçoivent un air déjà réchauffé, respectivement refroidi, par les cellules précédemment rencontrées, les cellules sont alors bien moins refroidies, respectivement réchauffées. Ceci provoque une limitation des performances, un vieillissement prématuré ou une dégradation des cellules qui sont les moins bien réchauffées ou refroidies et entraîne une inhomogénéité dans la batterie. Cette inhomogénéité réduit l'énergie utile car la cellule possédant la tension de charge la plus faible impose aux autres cellules son niveau de charge, et réduit ainsi le potentiel énergétique de l'ensemble de la batterie.

On peut également se référer au document US 2012021397 qui décrit un système pour réchauffer la batterie en faisant circuler un courant dans la batterie afin de réchauffer les cellules par leurs résistances internes.

Toutefois, un tel système permet de réchauffer l'ensemble des cellules de la batterie de manière uniforme de sorte que dès lors que des écarts de température existent entre les éléments, les disparités de température entre les différentes cellules d'un même pack batterie persistent.

Le document WO2012/117113 décrit un pack batterie formé de plusieurs modules pouvant être facilement connectés/déconnectés individuellement en cas de défaillance.

La présente invention a donc pour but de remédier à ces inconvénients.

Plus particulièrement, la présente invention vise à prévoir la régulation de la température à l'intérieur des éléments accumulateurs de la batterie afin d'obtenir une température similaire dans chaque cellule électrochimique.

Un autre objet de l'invention est de réchauffer les cellules électrochimiques d'une batterie directement par l'intérieur de la batterie.

L'invention a également pour objectif d'homogénéiser le vieillissement des éléments constituant le pack, afin d'obtenir un pack qui dure plus longtemps et ainsi de diminuer les remplacements des batteries en 'fin de vie'.

L'invention a pour objet un système de régulation de la température d'une batterie électrique selon la revendication 1, notamment de véhicule automobile hybride ou électrique, comprenant au moins deux éléments accumulateurs d'énergie électrique comportant chacun au moins une cellule électrochimique.

Le système de régulation de la température comprend des moyens pour augmenter l'intensité de la valeur du courant traversant la batterie jusqu'à une première valeur de seuil. Ainsi, une partie déterminée de la batterie est réchauffée. Il est également possible de réguler la température de la batterie afin de minimiser les disparités de température entre les cellules.

Les moyens pour augmenter l'intensité de la valeur du courant comprennent un module de déconnexion et de connexion d'un élément accumulateur d'énergie électrique. Ceci permettant aux éléments accumulateurs restés connectés de se réchauffer plus vite et à ceux déconnectés de se refroidir plus vite ou de moins se réchauffer que les autres éléments accumulateurs d'énergie.

Avantageusement, le système de régulation comprend un module de détermination de(s) l'élément(s) accumulateur(s) d'énergie électrique à déconnecter ou à connecter en fonction de la température de chaque élément accumulateur mesurée par un moyen de mesure.

Dans un mode de réalisation, le module de déconnexion et de connexion comprend des moyens de commutation de la circulation du courant dans les différents éléments accumulateurs d'énergie électrique. Ainsi, la température au sein de la batterie est homogénéisée et les disparités de températures entre chaque élément accumulateur d'énergie disparaissent.

Les cellules électrochimiques sont, par exemple, du type Lithium-ion.

Dans un mode de réalisation, la batterie électrique comprend N éléments accumulateurs d'énergie électrique et le module de déconnexion et de connexion est apte à déconnecter ou à connecter N-1 éléments accumulateurs d'énergie.

Selon un second aspect, l'invention concerne un procédé de régulation de la température d'une batterie électrique de véhicule automobile possédant une chaîne de traction hybride ou électrique selon la revendication 5, comprenant au moins deux éléments accumulateurs d'énergie électrique comportant chacun au moins une cellule électrochimique, dans lequel on augmente la valeur de l'intensité du courant traversant la batterie jusqu'à une première valeur de seuil en déconnectant ou en connectant au moins un des éléments accumulateurs d'énergie électrique.

Avantageusement, on détermine l'élément accumulateur d'énergie électrique à déconnecter en fonction de sa température et/ou de son emplacement dans la batterie et/ou de leur état de santé, dit « SOH » ou « State Of Health » en termes anglo-saxon.

Un avantage de réguler la température est de pouvoir augmenter, dans certains cas, les puissances d'échanges (= critère performance) contribuant au vieillissement.

Dans un mode de réalisation, on détermine l'élément accumulateur d'énergie électrique à déconnecter en fonction de la puissance requise par l'utilisateur. Ainsi, à température froide, lorsque la puissance demandée est faible, on connecte les éléments accumulateurs les plus froids pour les réchauffer et lorsque la puissance demandée est forte, on connecte les éléments accumulateurs les plus chauds afin de ne pas limiter le courant. Les éléments accumulateurs chauds vont se réchauffer encore plus vite ce qui accentue le déséquilibre mais permet à l'utilisateur de rouler.

Selon un mode de réalisation, on homogénéise la température des éléments accumulateurs d'énergie électrique en commutant la circulation du courant dans les différents éléments accumulateurs d'énergie électrique. On réchauffe ainsi successivement l'ensemble des éléments de la batterie.

Selon un autre mode de réalisation enfin, on peut aussi, pour homogénéiser la température de la batterie, réchauffer les éléments les plus froids en déconnectant les autres éléments (le courant est alors augmenté à puissance constante dans les éléments les plus froids ce qui contribue à leur échauffement), et/ou moins échauffer les éléments les plus chauds en les déconnectant (le courant qui traverse les cellules électrochimiques des éléments déconnectés est alors nul, par conséquent elles s'échauffent moins voire refroidissent).

D'autres buts, caractéristiques et avantages de l'invention apparaîtront à la lecture de la description suivante, donnée uniquement à titre d'exemple non limitatif, et faite en référence aux dessins annexés sur lesquels :
- la figure 1 illustre, de manière schématique, un système de régulation d'une batterie selon l'invention ;
- la figure 2 représente un mode de mise en oeuvre du procédé selon l'invention.

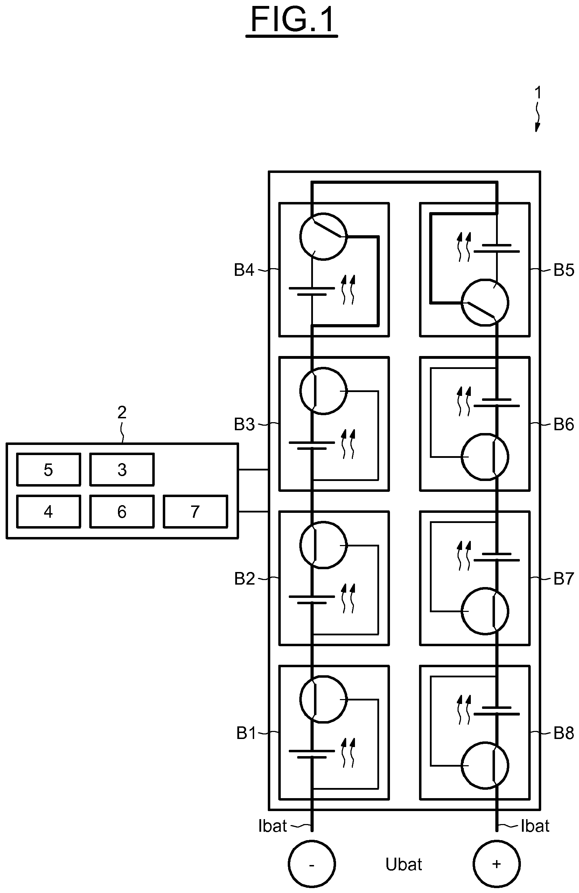

En se référant à la figure 1, un dispositif de stockage électrique sous forme d'une batterie électrochimique 1 comprend une pluralité d'éléments accumulateurs d'énergie électrique Bᵢ, i étant le nombre d'éléments accumulateurs compris entre 1 et N, permettant de produire de l'énergie électrique pour la motorisation d'un véhicule à traction ou à propulsion électrique ou hybride (non représenté).

Chaque élément accumulateur d'énergie électrique Bᵢ comporte au moins une cellule électrochimique, par exemple du type Lithium-ion.

La batterie 1 comporte ici huit éléments accumulateurs d'énergie électrique Bᵢ, i étant compris entre 1 et 8. On notera que la batterie 1 pourrait comprendre un nombre supérieur ou égal à deux d'éléments accumulateurs d'énergie électrique Bᵢ. Les éléments accumulateurs d'énergie B₁ à B₈ sont disposés en série. Le courant Ibat est le courant parcourant les éléments accumulateurs.

Le système de régulation de la température de la batterie, référencé 2 dans son ensemble, comprend un module de mesure 3 recevant :
- les données de la batterie 1 et de chaque élément provenant soit de moyens de mesures tels que des capteurs (non représentés) de température de chaque élément Ti, soit d'un module de traitement propre à chaque élément, tel que par exemple le calcul de la tension de chaque élément U_{i,i= 1 à 8}, à partir des mesures de tensions de chaque cellule en série à l'intérieur de l'élément correspondant.

Le système de régulation 2 comprend un module de comparaison 4 des données récupérées par le module de mesure 3 avec des valeurs de seuil Si, un module de détermination 5 des éléments accumulateurs d'énergie électrique Bᵢ à déconnecter ou à connecter et un module de déconnexion et de connexion 6 des éléments accumulateurs d'énergie électrique Bᵢ.

Le module de détermination 5 des éléments accumulateurs d'énergie Bᵢ à déconnecter ou à connecter prend en compte les données du module de mesure 3 et du module de comparaison 4. Le module de détermination 5 communique également avec le superviseur S (non représenté sur la figure 1) du véhicule afin de déterminer les éléments accumulateurs à déconnecter ou à connecter en fonction par exemple du mode de fonctionnement du véhicule, s'il est en mode de roulage ou éventuellement en mode de charge de la batterie.

Ainsi, lorsque la température Tbat de la batterie 1, est inférieure à une valeur seuil S_{Tabat}, par exemple 0°C, le système de régulation 2 de la température Tbat va déterminer les éléments accumulateurs d'énergie Bᵢ à déconnecter en fonction de la température Tᵢ dans chacun des éléments accumulateurs d'énergie Bᵢ. Pour Tbat, on pourra prendre la moyenne des températures : moy(Ti) des éléments Bi, ou bien, afin de prendre en compte les valeurs extrêmes de température, on pourra prendre pour les températures froides : Tbat_min correspondant au minimum des températures min(Ti) des éléments Bi.

Afin de réchauffer rapidement la batterie 1 ou au moins une partie de la batterie, les éléments accumulateurs d'énergie Bᵢ présentant une température Tᵢ très faible seront déconnectés. Le courant Ibat traversant les autres éléments accumulateurs d'énergie Bᵢ non déconnectés est alors augmenté et les pertes Joule générées par les résistances internes des cellules de chaque élément accumulateur d'énergie connecté permettent un réchauffement plus rapidement à coeur.

Tel qu'illustré sur la figure 1, le courant Ibat traverse les éléments accumulateurs d'énergie B₁, B₂, B₃, B₆, B₇, B₈ et les éléments accumulateurs d'énergie B₄, B₅ sont déconnectés. Ainsi, l'intensité du courant Ibat de la batterie 1 est augmentée pour une même puissance Pbat. Les cellules des éléments accumulateurs d'énergie B₁, B₂, B₃, B₆, B₇, B₈ parcourues par une intensité de courant Ibat plus importante se réchauffent plus rapidement via les pertes Joule générées par leurs résistances internes.

En variante, on pourrait connecter les éléments accumulateurs d'énergie Bi présentant une température Tᵢ très faible et déconnecter les éléments accumulateurs d'énergie Bᵢ présentant une température Tᵢ plus élevée afin de diminuer la tension Ubat et d'augmenter le courant Ibat, ce qui permettra aux éléments accumulateurs d'énergie Bᵢ de se réchauffer plus rapidement.

Le système de régulation 2 de la température comprend un module de commutation 7 intégré au module de connexion et de déconnexion 6, et communiquant avec le module de détermination 5, permettant de commuter la circulation du courant Ibat dans les différents éléments accumulateurs d'énergie électrique Bᵢ afin de permuter les éléments accumulateurs d'énergie Bᵢ régulièrement de façon à ce que l'ensemble de la batterie 1 se réchauffe de façon homogène et que les disparités de température entre chaque élément disparaissent.

Alternativement, on pourrait prévoir un système de réchauffage classique (non représenté). Dans ce cas, les éléments accumulateurs d'énergie électrique situés en aval du système de réchauffage sont déconnectés car ils vont se réchauffer plus vite. Les autres éléments accumulateurs d'énergie se réchaufferont via le courant qui traverse leurs résistances internes.

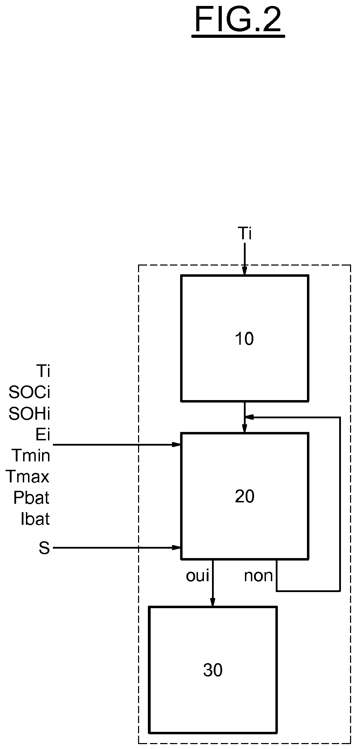

La figure 2 illustre un procédé de régulation de la température Tbat de la batterie 1 comprenant une étape 10 d'analyse des températures T_{i,i= 1 à N} mesurées dans chacun des éléments Bi de la batterie 1 et de comparaison avec une valeur de seuil de température S_{Tbat} et une étape 20 de détermination d'une configuration améliorant le conditionnement thermique de la batterie, c'est-à-dire le nombre et quels éléments accumulateurs Bᵢ à déconnecter. L'étape 20 détermine également si la configuration choisie peut être appliquée en fonction des données de la batterie 1 et de chaque élément, notamment en fonction de : l'intensité du courant Ibat traversant la batterie 1, de la tension Ubat délivrée par la batterie, de la puissance Pbat délivrée par la batterie 1, de l'état de charge SOCi de chaque élément accumulateur, de l'état initial Ei de chaque élément accumulateur, s'il est déconnecté ou non, des températures minimales et maximales Tmin, Tmax des cellules dans chaque élément accumulateur ainsi que des informations provenant du superviseur S du véhicule.

A l'étape 20, on vérifie que la valeur de l'intensité du courant Ibat traversant la batterie 1 est inférieure à une valeur seuil S_{Ibat} afin de ne pas dégrader les cellules électrochimiques. On notera que la valeur seuil S_{Ibat} n'est pas une valeur constante et peut provenir, par exemple, d'une cartographie : S=f(SOC, T), fonction de l'état de charge SOC et de la température T. Ainsi, pour un élément connecté, le courant max traversant les cellules de l'élément est fonction de SOCi et de Ti. Les éléments accumulateurs étant connectés en série, c'est le même Ibat qui traverse toutes les cellules de tous les éléments connectés. La valeur de l'intensité Ibat doit donc être inférieure au courant maximum de chaque élément.

On vérifie que la tension Ubat aux bornes de la batterie 1 est supérieure à une valeur seuil S_{Ubat} afin de ne pas descendre en dessous d'une limite basse de tension par exemple de 240V.

On vérifie que la puissance Pbat délivrée par la batterie 1 est supérieure à une valeur seuil S_{Pbat} afin de fournir une puissance électrique suffisante au moteur électrique et éventuellement aux autres dispositifs alimentés en énergie électrique par la batterie.

Le procédé de régulation comprend une étape 30 d'application de la configuration choisie lorsque les conditions d'applications ont été vérifiées et approuvées à l'étape 20.

Dans un premier temps, lorsque la température Tbat de la batterie 1 est inférieure à la valeur de seuil de température S_{Tbat}, on déconnecte à l'étape 30 les éléments accumulateurs d'énergie électrique Bᵢ les plus froids pour qu'ils n'imposent par leurs limitations aux autres éléments accumulateurs d'énergie. Les autres éléments accumulateurs d'énergie sont alors traversés par un courant d'une intensité Ibat plus importante que pour une batterie 1 standard et se réchauffent via les pertes Joule générées par le passage du courant à travers la résistance interne de leurs cellules.

La valeur de l'intensité de la batterie 1 est ainsi augmentée jusqu'à une première valeur de seuil S_{Ibat}.

Une fois qu'une partie des éléments accumulateurs d'énergie Bᵢ sont réchauffés, on compare à nouveau les températures T_{i,i= 1 à N} mesurées dans chacun des éléments et on commute la circulation du courant Ibat dans les éléments accumulateurs d'énergie Bᵢ afin de déconnecter cette fois les éléments accumulateurs d'énergie les plus chauds pour homogénéiser la température Tbat à l'intérieur de la batterie 1.

Les éléments accumulateurs d'énergie Bᵢ peuvent également être déconnectés en fonction de leur emplacement dans la batterie 1 et de leur état de santé SOHᵢ.

Alternativement, on pourrait utiliser également un système de réchauffage classique. Dans ce cas, on déconnecte les éléments accumulateurs d'énergie situés en aval du système de réchauffage afin de ne pas être réchauffés à la fois par les pertes générées par le passage du courant dans leurs résistances internes et le système de chauffage classique. Les autres éléments accumulateurs d'énergie se réchaufferont via le courant qui traverse leurs résistances internes.

Grâce à l'invention qui vient d'être décrite, le réchauffement de la batterie est basé sur l'utilisation de la résistance interne des cellules, la source de chaleur exploitée se situe donc à l'intérieur même de la batterie, favorisant ainsi l'efficacité du réchauffement. En effet, la résistance interne des cellules augmente très fortement lorsque la température diminue. Les pertes par effet Joule des cellules sont très importantes et sont utilisées pour réchauffer les cellules.

Ainsi, le vieillissement des cellules d'une batterie est réduit par l'amélioration de l'homogénéité de la température des cellules.

Cette homogénéité est assurée par les moyens de détermination des éléments accumulateurs d'énergie à déconnecter et les moyens de commutation de la circulation du courant dans les différents éléments accumulateurs d'énergie électrique de la batterie en fonction de la température de chaque élément accumulateur d'énergie électrique, de leur emplacement dans le véhicule et de l'état de charge de la batterie.

## Revendications

1. Système de régulation de la température d'une batterie électrochimique (1), notamment de véhicule automobile hybride ou électrique, comprenant au moins deux éléments accumulateurs d'énergie électrique (Bᵢ) comportant chacun au moins une cellule électrochimique, le système de régulation comprenant un module de mesure (3) de la température (Tbat) de la batterie et un module de comparaison de la température (Tbat) mesurée de la batterie avec une valeur seuil (STbat), **caractérisé en ce qu'**il comprend des moyens (6, 7) pour augmenter l'intensité de la valeur du courant (Ibat) traversant la batterie (1) jusqu'à une première valeur de seuil (SIbat) lorsque la température (Tbat) mesurée de la batterie est inférieure a la valeur seuil (STbat), lesdits moyens (6, 7) pour augmenter l'intensité de la valeur du courant (Ibat) comprenant un module de déconnexion et de connexion (6) d'un élément accumulateur d'énergie électrique (Bᵢ), et **en ce qu'**il comprend un module de détermination (5) de(s) l'élément(s) accumulateur(s) d'énergie électrique à déconnecter ou à connecter (Bᵢ) en fonction de la température (Tᵢ) dans chacun des éléments accumulateurs mesurée par un moyen de mesure.

2. Système de régulation selon la revendication 1, dans lequel le module de déconnexion et de connexion (6) comprend des moyens de commutation (7) de la circulation du courant (Ibat) dans les différents éléments accumulateurs d'énergie électrique (Bᵢ).

3. Système de régulation selon l'une quelconque des revendications 1 ou 2, dans lequel les cellules électrochimiques sont du type Lithium-ion.

4. Système de régulation selon l'une quelconque des revendications 1 à 3, dans lequel la batterie électrochimique (1) comprend N éléments accumulateurs d'énergie électrique (Bᵢ) et le module de déconnexion et de connexion (6) est apte à déconnecter N-1 éléments accumulateurs d'énergie (Bᵢ).

5. Procédé de régulation de la température d'une batterie électrochimique (1) de véhicule automobile à chaîne de traction hybride ou électrique, comprenant au moins deux éléments accumulateurs d'énergie électrique (Bᵢ) comportant chacun au moins une cellule électrochimique, **caractérisé en ce que** l'on augmente la valeur de l'intensité (Ibat) du courant traversant la batterie (1) jusqu'à une première valeur de seuil (S_{Ibat}) en déconnectant ou en connectant au moins un des éléments accumulateurs d'énergie électrique (Bᵢ), et **en ce que** on détermine l'élément accumulateur d'énergie électrique (Bᵢ) à déconnecter en fonction de sa température (Tᵢ) et/ou de son emplacement dans la batterie (1) et/ou de son état santé (SOHᵢ) et en fonction de la température (Tbat) mesurée de la batterie.

6. Procédé de régulation de température selon la revendication 5 dans lequel lorsque la température (Tbat) mesurée de la batterie est inférieure à la valeur seuil (STbat), on déconnecte l'élément accumulateur d'énergie électrique (Bi) le plus froid.

7. Procédé de régulation de température selon la revendication 5 ou 6, dans lequel on détermine l'élément accumulateur d'énergie électrique (Bᵢ) à déconnecter en fonction de la puissance requise par l'utilisateur.

8. Procédé de régulation de température selon l'une quelconque des revendications 5 à 7, dans lequel on homogénéise la température (Ti) des éléments accumulateurs d'énergie électrique (Bᵢ) en commutant la circulation du courant (Ibat) dans les différents éléments accumulateurs d'énergie électrique (Bᵢ).

## Patentansprüche

1. System zum Regeln der Temperatur einer elektrochemischen Batterie (1), insbesondere eines automobilen Hybrid- oder Elektrofahrzeugs, umfassend zumindest zwei Elemente zum Speichern elektrischer Energie (Bᵢ), die jeweils zumindest eine elektrochemische Zelle aufweisen, wobei das System zum Regeln ein Modul zum Messen (3) der Temperatur (Tbat) der Batterie und ein Modul zum Vergleichen der gemessenen Temperatur (Tbat) der Batterie mit einem Schwellenwert (STbat) umfasst, **dadurch gekennzeichnet, dass** es Mittel (6, 7) zum Erhöhen der Stärke des Werts des Stroms (Ibat), der die Batterie (1) durchfließt, auf einen ersten Schwellenwert (SIbat), wenn die gemessene Temperatur (Tbat) der Batterie geringer als der Schwellenwert (STbat) ist, umfasst, wobei die Mittel (6, 7) zum Erhöhen der Stärke des Werts des Stroms (Ibat) ein Modul zum Trennen und Anschließen (6) eines Elements zum Speichern elektrischer Energie (Bᵢ) umfassen, und dadurch, dass es ein Modul zum Bestimmen (5) des/der zu trennenden bzw. anzuschließenden Elements/Elemente zum Speichern elektrischer Energie (Bᵢ) je nach der Temperatur (Tᵢ) in jedem der Speicherelemente umfasst, die durch ein Messmittel gemessen wird.

2. System zum Regeln nach Anspruch 1, wobei das Modul zum Trennen und Verbinden (6) Mittel zum Umschalten (7) des Flusses des Stroms (Ibat) in den verschiedenen Elementen zum Speichern elektrischer Energie (Bᵢ) umfasst.

3. System zum Regeln nach einem der Ansprüche 1 oder 2, wobei die elektrochemischen Zellen vom Lithium-Ionen-Typ sind.

4. System zum Regeln nach einem der Ansprüche 1 bis 3, wobei die elektrochemische Batterie (1) N Elemente zum Speichern elektrischer Energie (Bᵢ) umfasst und das Modul zum Trennen und Anschließen (6) in der Lage ist, N-1 Elemente zum Speichern von Energie (Bᵢ) zu trennen.

5. Verfahren zum Regeln der Temperatur einer elektrochemischen Batterie (1) eines automobilen Fahrzeugs mit Hybrid- oder Elektroantrieb, umfassend zumindest zwei Elemente zum Speichern elektrischer Energie (Bᵢ), die jeweils zumindest eine elektrochemische Zelle aufweisen, **dadurch gekennzeichnet, dass** die Stärke des Werts des Stroms (Ibat), der die Batterie (1) durchfließt, auf einen ersten Schwellenwert (SIbat) erhöht wird, indem zumindest eins der Elemente zum Speichern elektrischer Energie (Bᵢ) getrennt oder angeschlossen wird, und dadurch, dass das zu trennende Element zum Speichern elektrischer Energie (Bᵢ) je nach seiner Temperatur (Tᵢ) und/oder seiner Stelle in der Batterie (1) und/oder seinem Zustand (SOHᵢ) und je nach der gemessenen Temperatur (Tbat) der Batterie bestimmt wird.

6. Verfahren zur Temperaturregelung nach Anspruch 5, wobei das kälteste Element zum Speichern elektrischer Energie (Bᵢ) getrennt wird, wenn die gemessene Temperatur (Tbat) der Batterie geringer als der Schwellenwert (STbat) ist.

7. Verfahren zur Temperaturregelung nach Anspruch 5 oder 6, wobei das zu trennende Element zum Speichern elektrischer Energie (Bᵢ) je nach der Leistung bestimmt wird, die vom Benutzer gefordert wird.

8. Verfahren zur Temperaturregelung nach einem der Ansprüche 5 bis 7, wobei die Temperatur (Ti) der Elemente zum Speichern elektrischer Energie (Bᵢ) durch Umschalten des Flusses des Stroms (Ibat) in den verschiedenen Elementen zum Speichern von elektrischer Energie (Bᵢ) homogenisiert wird.

## Claims

1. System for regulating the temperature of an electrochemical battery (1), notably of a hybrid or electric motor vehicle, including at least two electrical-energy-accumulating elements (Bᵢ), each comprising at least one electrochemical cell, the regulating system comprising a module (3) for measuring the temperature (Tbat) of the battery and a module for comparing the measured temperature (Tbat) of the battery with a threshold value (STbat), **characterized in that** it includes means (6, 7) for increasing the intensity of the value of the current (Ibat) flowing through the battery (1) up to a first threshold value (SIbat) when the measured temperature (Tbat) of the battery is lower than the threshold value (STbat), said means (6, 7) for increasing the intensity of the value of the current (Ibat) including a module (6) for disconnecting and connecting an electrical-energy-accumulating element (Bᵢ), and **in that** it includes a module (5) for determining the electrical-energy-accumulating element(s) to be disconnected or connected (Bᵢ) as a function of the temperature (Tᵢ) in each of the accumulating elements measured by a measurement means.

2. Regulating system according to Claim 1, in which the disconnection and connection module (6) includes means (7) for switching the flow of the current (Ibat) in the different electrical-energy-accumulating elements (Bᵢ).

3. Regulating system according to either one of Claims 1 and 2, in which the electrochemical cells are lithium-ion cells.

4. Regulating system according to any one of Claims 1 to 3, in which the electrochemical battery (1) includes N electrical-energy-accumulating elements (Bᵢ) and the disconnection and connection module (6) is capable of disconnecting or connecting N-1 energy-accumulating elements (Bᵢ).

5. Method for regulating the temperature of an electrochemical battery (1) of a motor vehicle having a hybrid or electric power train, including at least two electrical-energy-accumulating elements (Bᵢ), each comprising at least one electrochemical cell, **characterized in that** the value of the intensity (Ibat) of the current flowing through the battery (1) is increased up to a first threshold value (S_{Ibat}) by disconnecting or by connecting at least one of the electrical-energy-accumulating elements (Bᵢ), and **in that** the electrical-energy-accumulating element (Bᵢ) to be disconnected is determined as a function of its temperature (Tᵢ) and/or its location in the battery (1) and/or its state of health (SOHᵢ) and as a function of the measured temperature (Tbat) of the battery.

6. Temperature-regulating method according to Claim 5, in which when the measured temperature (Tbat) of the battery is lower than the threshold value (STbat), the coolest electrical-energy-accumulating element (Bi) is disconnected.

7. Temperature-regulating method according to Claim 5 or 6, in which the electrical-energy-accumulating element (Bᵢ) is determined as a function of the power required by the user.

8. Temperature-regulating method according to any one of Claims 5 to 7, in which the temperature (Ti) of the electrical-energy-accumulating elements (Bᵢ) is homogenized by switching the flow of the current (Ibat) in the different electrical-energy-accumulating elements (Bᵢ).
